# EUROPEAN PATENT SPECIFICATION

(11) **EP 4 456 825 B1**
(45) Date of publication and mention of the grant of the patent: **10.09.2025**
(21) Application number: 22843401.5
(22) Date of filing: 27.12.2022
(51) Int. Cl.: A61C 5/70, A61C 5/77

(54) **PREFABRICATED CROWN WITH SNAP-ON FEATURES**
VORGEFERTIGTE KRONE MIT SCHNAPPMERKMALEN
COURONNE PRÉFABRIQUÉE À ÉLÉMENTS D'ENCLIQUETAGE

(30) Priority: 30.12.2021 US 202163295010 P
(43) Date of publication of application: 06.11.2024
(73) Proprietor: Solventum Intellectual Properties Company, Maplewood, MN 55144 (US)
(72) Inventor: KIRCHNER, Bastian P., 82229 Seefeld (DE); PEUKER, Marc, 82229 Seefeld (DE); OBERPERTINGER, Daniel D., 82229 Seefeld (DE); URBAN, Michaela, 82229 Seefeld (DE); KORTEN, Malte, 82229 Seefeld (DE); SCHECHNER, Gallus, 82229 Seefeld (DE); SYREK, Andreas, 82229 Seefeld (DE); ZILLIGEN, Guenter M., 41453 Neuss (DE); VON HOEGEN, Markus, 41453 Neuss (DE)
(74) Representative: Brem, Roland
(86) International application number: PCT/IB2022/062818
(87) International publication number: WO 2023/126838

(56) References cited:
- WO-A1-2022/189906
- JP-A- 2017 046 793
- US-A1- 2010 151 423
- US-A1- 2016 022 378
- US-A1- 2018 098 828

## Description

### BACKGROUND

Prefabricated dental crowns are widely used in dentistry. A dental crown is a tooth-shaped cap configured to encircle a tooth structure or dental implant. Dental crowns are often needed when a cavity threatens the health of the tooth.

A dentist will typically select a dental crown from a variety of prefabricated crowns of various shapes and sizes. The dentist will frequently adapt the selected dental crown (e.g., shorten, deform, or thin) and/or modify the tooth structure in order to achieve greater fit.

Cementing of a dental crown to a tooth structure is a sensitive technique since cements tend to have limited moisture tolerance, which can affect setting of the cement and further affect the stability of the seated crown. It has been demonstrated that seated dental crowns are significantly more stable when the dental crown has been manipulated (e.g., undercut) to secure it to the tooth structure. However, such undercuts are currently only available with dental crowns made of elastic or ductile materials. For example, metal crowns are bendable and may be crimped to create an undercut after seating. Ceramic crowns, on the other hand, are inelastic and must rely solely on cement for stability. Likewise, composite crowns, though elastic, are not bendable or able to be crimped.

In order to increase the seating stability of dental crowns prepared from ceramic, composite, or other low elastic (i.e., materials having an E Modulus of no greater than 150 GPa) or non-ductile materials, new designs with suitable securements are desired.

US2018098828A1 discloses a method of using hardenable dental articles including placing a film onto a dental structure to cover at least a portion of the dental structure; providing a hardenable dental article; and applying the hardenable dental article to the dental structure covered by the film.

### SUMMARY

In one embodiment, a dental crown is described. The dental crown includes an occlusion surface or an incisal surface depending upon the particular tooth that is in need of repair; a tooth structure-facing surface located opposite the occlusion surface or the incisal surface; a crown wall that surrounds the tooth structure-facing surface and terminates at a circumferential rim; a recess defined at least by the tooth structure-facing surface and the crown wall, and configured to receive a tooth structure having a retention feature; and at least one protrusion extending from the crown wall within the recess, wherein a mesial surface and a distal surface within the recess are each free of the at least one protrusion.

In one disclosure, not forming part of the claimed invention, a method for preparing a dental crown of the present disclosure is described. The method includes constructing a dental crown including at least one protrusion by way of an additive manufacturing technique, an injection molding technique, a deep-drawing technique, a cold-forming technique, a thermoforming technique, a subtractive manufacturing technique, or a combination thereof.

In one disclosure, not forming part of the claimed invention, a method for preparing a dental crown of the present disclosure is described. The method includes providing a dental crown with or without at least one protrusion (e.g., a traditional-type crown or a crown of the present disclosure), applying a hardenable composition to an interior surface of the crown wall, and hardening the hardenable composition to form at least one protrusion.

In one disclosure, not forming part of the claimed invention, a method for repairing a tooth is described. The method includes providing a dental crown described herein, placing the dental crown onto a tooth structure such that the tooth structure is inserted into the recess of the dental crown, and applying pressure to the dental crown effective to allow the at least one protrusion to traverse a retention feature on the tooth structure.

In one disclosure, not forming part of the claimed invention, a method for repairing a tooth is described. The method may include providing a dental crown (i.e., a traditional-type crown or a crown of the present disclosure), applying a hardenable dental composition to an interior surface of the crown wall of the dental crown, hardening the dental composition to form at least one protrusion (protrusions described herein), placing the dental crown onto a tooth structure such that the tooth structure is inserted into a recess of the dental crown, and applying pressure to the dental crown effective to allow the at least one protrusion to traverse a retention feature on the tooth structure.

In one disclosure, not forming part of the claimed invention, a kit is described. The kit includes a dental crown of the present disclosure (i.e., having at least one protrusion), and a set of instructions directing a user to perform the method steps for repairing a tooth.

In one disclosure, not forming part of the claimed invention, a kit is described. The kit includes a dental crown with or without at least one protrusion, and a set of instructions directing a user to perform the method steps for modifying the dental crown to form a dental crown having at least one protrusion, and further directing a user to repair a tooth with the formed dental crown having at least one protrusion.

### BRIEF DESCRIPTION OF DRAWINGS

**FIG. 1A** depicts a traditional dental crown.
**FIG. 1B** is an exemplary dental crown having retention features on both buccal and lingual faces of the crown wall.
**FIG. 1C** is another exemplary dental crown having retention features on both buccal and lingual faces of the crown wall.
**FIG. 2A** is a cross-sectional side view of an exemplary retention feature (i.e., hemisphere)
**FIG. 2B** is a cross-sectional side view of an exemplary retention feature (i.e., spring hook)
**FIG. 2C** is a cross-sectional side view of an exemplary retention feature (i.e., spring hook)
**FIG. 2D** is a cross-sectional side view of an exemplary retention feature (i.e., spring hemisphere)
**FIG. 3A** is a graphical representation of the seating and pull-off forces of a traditional dental crown on six different tooth structure sizes (i.e., different oral-vestibular lengths).
**FIG. 3B** is a graphical representation of the seating and pull-off forces of a dental crown having protrusions on six different tooth structure sizes (i.e., different oral-vestibular lengths).
**FIG. 3C** is a graphical representation comparing the seating and pull-off forces between a traditional dental crown and a dental crown of the present disclosure within a tooth structure having an oral-vestibular length of 8.34 mm.
**FIG. 3D** is a graphical representation comparing the seating and pull off forces between a traditional dental crown and a dental crown of the present disclosure within a tooth structure having an oral-vestibular length of 8.54 mm.
**FIG. 3E** is a graphical representation comparing the seating and pull off forces between a traditional dental crown and a dental crown of the present disclosure within a tooth structure having an oral-vestibular length of 8.64 mm.
**FIG. 4** is a graphical heatmap depicting the seated forces of a traditional dental crown (top) and the seated forces of a dental crown having retention features (bottom).
**FIG. 5A** is a flow chart of a method for repairing a tooth structure.
**FIG. 5B** is an illustration of seating a dental crown onto a tooth structure.
**FIG. 5C** is an illustration of seating a dental crown onto a tooth structure.
**FIG. 6A** is an illustration depicting the distribution of forces experienced within a traditional dental crown upon seating.
**FIG. 6B** is an illustration depicting the distribution of forces experienced within a dental crown having protrusions on both buccal and lingual faces of the crown wall.
**FIG. 7** is a flow chart representing a method for preparing a dental crown of the present disclosure.
**FIG. 8** is a flow chart representing a method for preparing a dental crown of the present disclosure.
**FIG. 9** is a kit including one or more dental crown and a set of instructions for repairing a tooth.
**FIG. 10** is a drawing of a crown with the terms mesial-distal length and oral-vestibular length illustrated.

### DETAILED DESCRIPTION

The present disclosure is directed toward dental crowns having one or more protrusion extending from the interior crown wall toward the center of the crown recess. The protrusions are effective to provide a "snap-on" or "snap-over" mechanism for securing the dental crown around a retention feature on the tooth structure. Moreover, the protrusions minimize internal stresses experienced within the crown upon seating, removing, and even while seated. Fitting is also simplified since a wider range of tooth structure sizes are accommodated by dental crowns having protrusions. Simplified fitting reduces the time and effort required by practitioners (e.g., the time and effort to resize dental crowns and/or tooth structures).

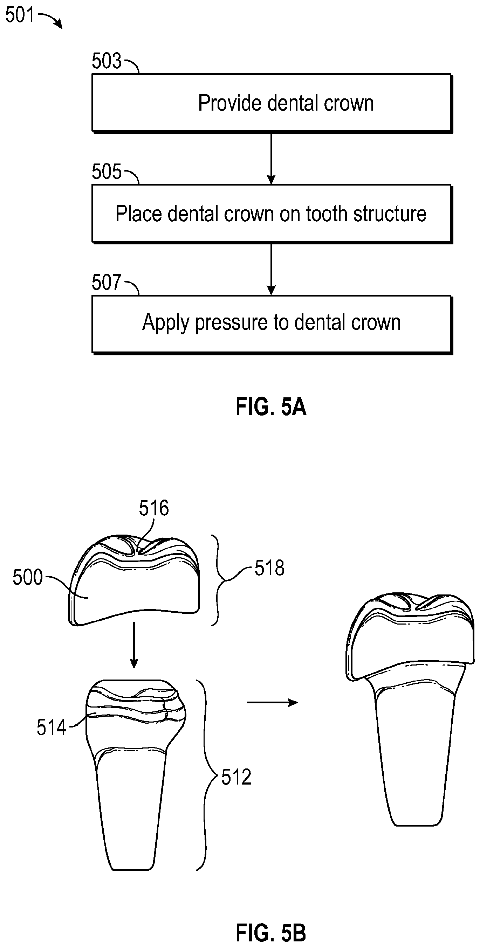

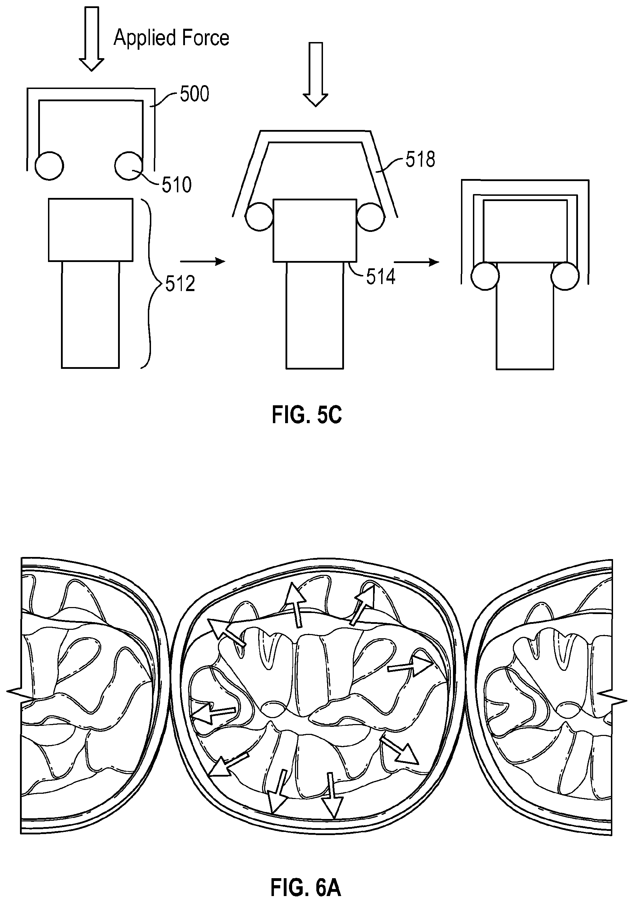

Traditional dental crowns do not have securing protrusions. Upon seating (i.e., applying pressure (i.e., seating force) to a dental crown in order to insert a tooth structure into the crown recess; see **FIG. 5B****),** the tooth structure presses the circumferential rim and crown walls outward (see **FIG. 6A****).** Dental crowns that are too small for a given tooth structure often crack under this outward radial force. Even if undersized dental crowns do not crack upon seating, a constant outward force due to the tooth structure pressing on the dental crown (i.e., seated stress) often leads to structural failure over time. Conversely, dental crowns that are too big do not seat firmly. An oversized dental crown can lead to tilting/rocking and even complete detachment after a period of use. The presence of protrusions, however, allow for the use of larger dental crowns without tilting/rocking since the "snap-on" or "snap-over" feature effectively reduces the dental crown size.

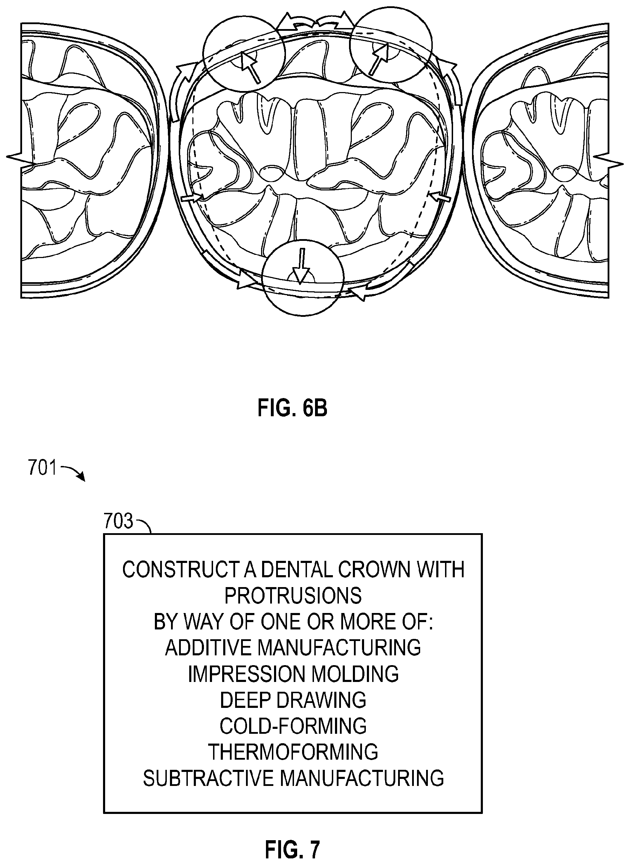

Seating forces are better distributed in dental crowns having one or more protrusions. Outward radial force is generally concentrated at the sites of the protrusion(s), and said outward radial force is distributed tangentially throughout the circumference of the crown. In other words, the outward force exerted at the points of protrusion cause the crown rim and walls to contract toward the protrusion (see **FIG. 6B****).** As the protrusion(s) surpass a retention feature on the tooth structure (e.g., basal ridge or a prepared undercut), the crown reverts to its original shape while the protrusions serve to lock the crown in place (see **FIG. 5C****).**

### Drawing Description

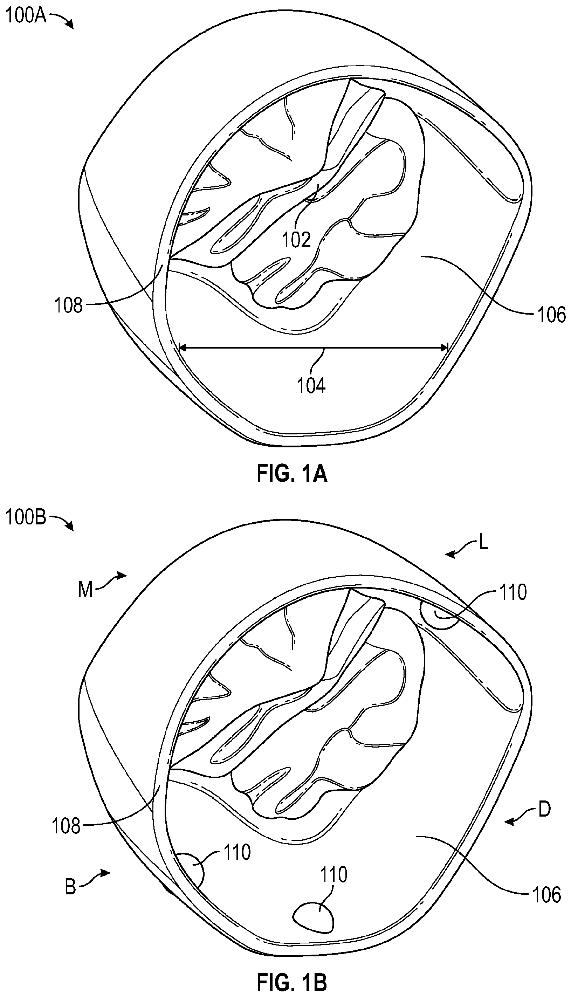

**FIG. 1A** depicts a traditional dental crown **100A.** Dental crown **100A** includes a tooth structure-facing surface **102.** Tooth structure-facing surface **102** is opposite an occlusion surface (not shown) and is configured to be in contact with a tooth structure upon inserting the tooth structure into crown recess **104.** Crown recess **104** is made up by tooth structure-facing surface **102** that is surrounded by crown wall **106.** Crown wall **106** terminates at circumferential rim **108.**
**FIG. 1B** depicts an exemplary dental crown **100B** of the present disclosure. Dental crown **100B** includes all of the features of dental crown **100A.** Dental crown **100B** is shown to include two protrusions **110** on the buccal surface **B** of crown wall **106** some distance from circumferential rim **108,** and one protrusion **110** on the lingual surface **L** of crown wall **106.** Dental crown **100B** is free of protrusions on mesial surface **M** and distal surface **D** of crown wall **106.** Protrusions **110** are shown as being hemispherical in shape.

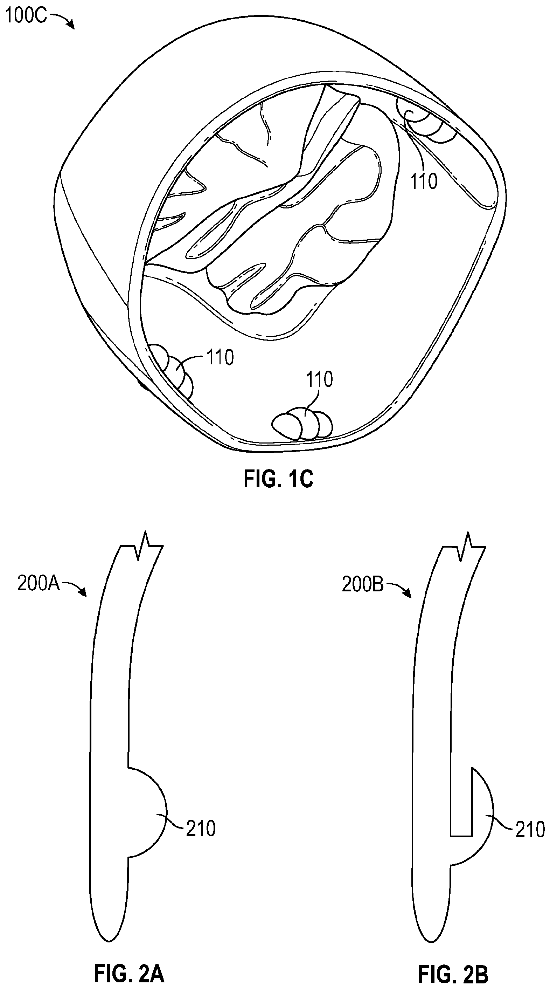

**FIG. 1C** depicts an exemplary dental crown **100C** of the present disclosure. Dental crown **100C** includes all of the features of dental crown **100A** and **100B.** Dental crown **100C** differs from dental crown **100B** in the shape of protrusions **110.** Protrusions **110** are shown as a plurality of joined hemispherical shapes.

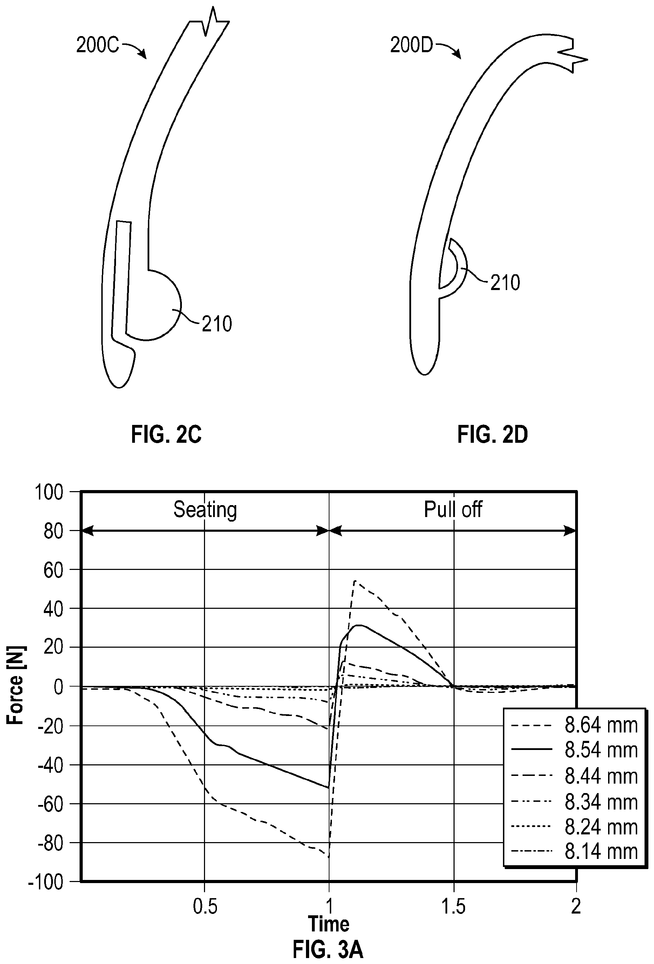

**FIG. 2A-2D** are perspective views of exemplary dental crowns **200A-200D** having different protrusion **210** shapes. **FIG. 2A** depicts a protrusion **210** having a solid, hemispherical shape. **FIG. 2B** and **FIG. 2D** depict protrusions **210** having a different hook shapes that have a spring-like effect, i.e., spring hook shape. **FIG. 2C** depicts a protrusion **210** having a solid hemispherical shape with a hollowed portion to have a spring-like effect, i.e., spring hemispherical shape.
**FIG. 3A** represents FEM simulation data of measured force experienced throughout a traditional dental crown (as depicted in **100A,** having an inner oral-vestibular length of 8.52 mm) upon seating (left-hand side), in a seated position (center), and upon removing (i.e., pull-off; right-hand side). Each line of data represents a different-sized tooth structure that the dental crown is seated upon. It can be seen that larger tooth structures experience greater internal stresses upon seating and removal. It can further be seen that the dental crowns experience constant stress even when seated. Tooth structures that are smaller require less force to seat and/or remove; however, dental crowns seated on tooth structures that are too small rely heavily on cement for stability. The representative tooth-structures are characterized as follows: oral-vestibular lengths: 8.64 mm, 8.54 mm, 8.44 mm, 8.34 mm, 8.24 mm, and 8.14 mm.

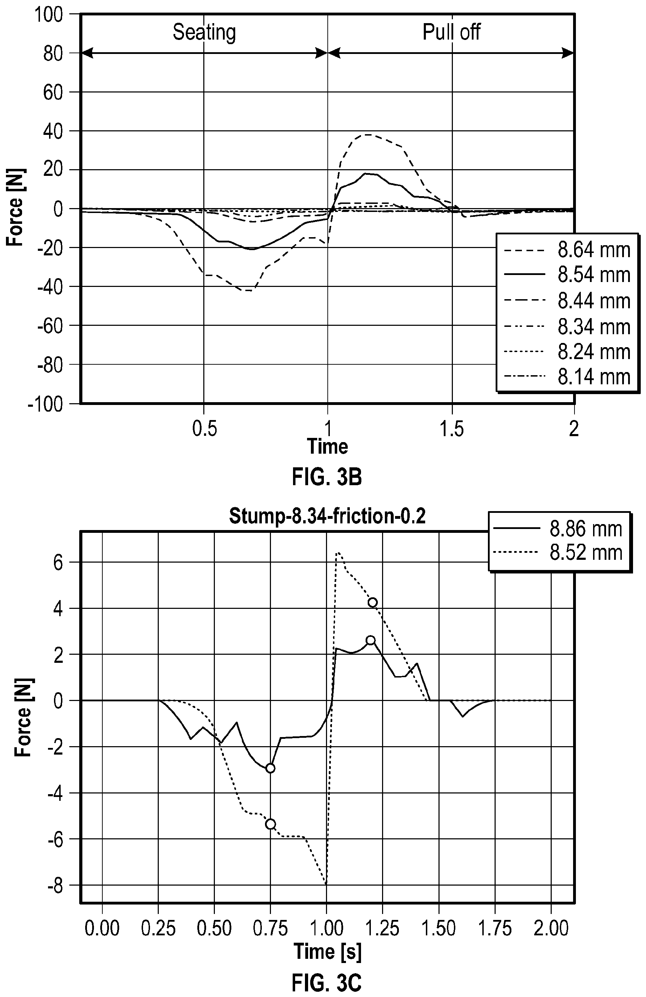

**FIG. 3B** represents FEM simulation data of measured force experienced throughout a dental crown (as depicted in **100B,** having an inner oral-vestibular length of 8.86 mm) with protrusions (i.e., two mesial hemispherical protrusions and one lingual hemispherical protrusion) upon seating (left-hand side), in a seated position (center), and upon removing (i.e., pull-off; right-hand side). The representative tooth-structures are characterized as follows: oral-vestibular lengths: 8.64 mm, 8.54 mm, 8.44 mm, 8.34 mm, 8.24 mm, and 8.14 mm. The conditions used in the simulation to generate the data of **FIG. 3B** differ from the conditions used in simulation to generate the data of **FIG. 3A** by the presence of protrusions and a dental crown oral-vestibular length increase of approx. 4%. The presence of protrusions significantly decreased the stresses in seating, removing, and in a seated position.
**FIG. 3C** represents comparative FEM simulation data of measured force (i.e., upon seating (left-hand side), in a seated position (center), and upon removing (i.e., pull-off; right-hand side)) between a traditional dental crown (as depicted in **100A,** having an inner oral-vestibular length of 8.52 mm) and a dental crown (as depicted in **100B,** having an oral-vestibular length of 8.86 mm) with protrusions (i.e., two vestibular hemispherical protrusions and one oral hemispherical protrusion). Each dental crown was placed on a tooth structure having an oral-vestibular length of 8.34 mm. It can be seen that the presence of protrusions reduces the stress within the dental crown by 45% upon seating, reduces the stress by 37% upon pull-off, and reduces the stress to zero while seated.

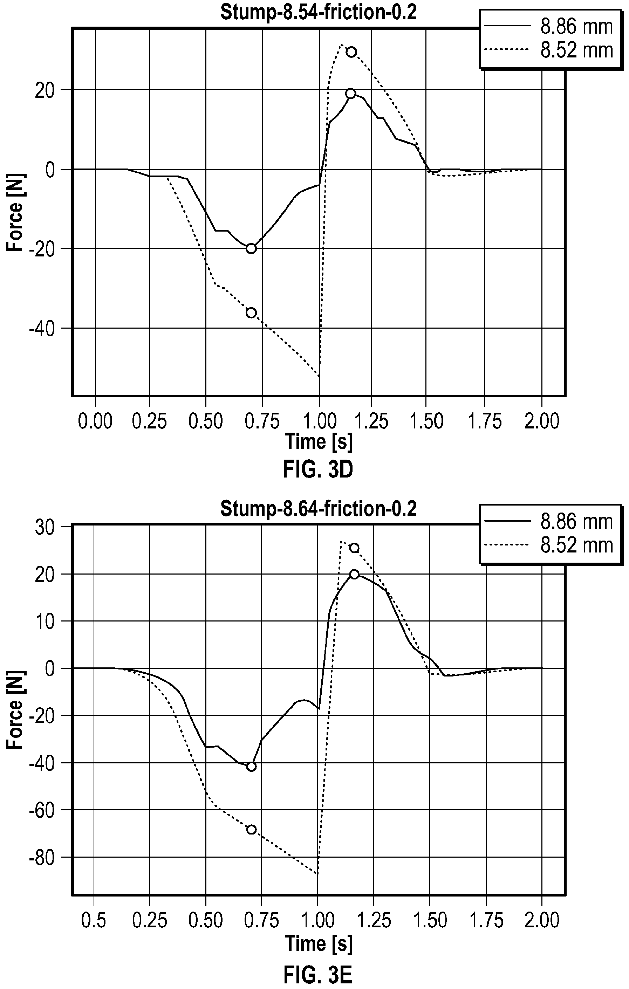

**FIG. 3D** represents comparative FEM simulation data of measured force (i.e., upon seating (left-hand side), in a seated position (center), and upon removing (i.e., pull-off; right-hand side)) between a traditional dental crown (as depicted in **100A,** having an inner oral-vestibular length of 8.52 mm) and a dental crown (as depicted in **100B,** having an inner oral-vestibular length of 8.86 mm) with protrusions (i.e., two vestibular hemispherical protrusions and one oral hemispherical protrusion). Each dental crown was placed on a tooth structure having an oral-vestibular length of 8.54 mm. It can be seen that the presence of protrusions reduces the stress within the dental crown by 46% upon seating, reduces the stress by 37% upon pull-off, and reduces the stress to zero while seated. Further, it can be seen that a larger tooth structure (i.e., oral-vestibular length of 8.54 mm), as compared to **FIG. 3C** (i.e., tooth structure with oral-vestibular length of 8.34), increases the overall stress.
**FIG. 3E** represents comparative FEM simulation data of measured force (i.e., upon seating (left-hand side), in a seated position (center), and upon removing (i.e., pull-off; right-hand side)) between a traditional dental crown (as depicted in **100A,** having an inner oral-vestibular length of 8.52 mm) and a dental crown (as depicted in **100B,** having an inner oral-vestibular length of 8.86 mm), with protrusions (i.e., two vestibular hemispherical protrusions and one oral hemispherical protrusion). Each dental crown was placed on a tooth structure having an oral-vestibular length of 8.64 mm. It can be seen that the presence of protrusions reduces the stress within the dental crown by 40% upon seating, reduces the stress by 21% upon pull-off, and reduces the stress to zero while seated. Further, it can be seen that a larger tooth structure (i.e., oral-vestibular length of 8.64), as compared to **FIG. 3C** (i.e., tooth structure oral-vestibular length of 8.34) and **FIG. 3D** (i.e., tooth structure oral-vestibular length of 8.54), increases the overall stress.

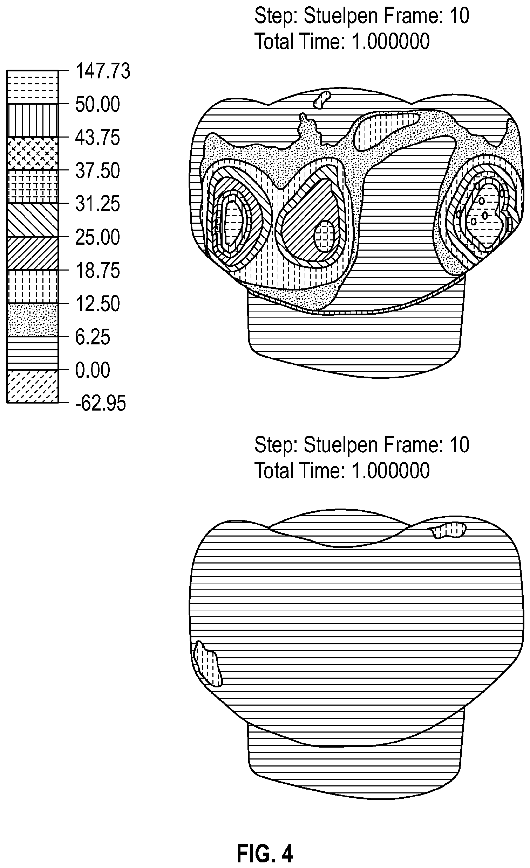

**FIG. 4** illustrates the distribution of stress (i.e., seated stress) experienced by a seated traditional dental crown (as depicted in **100A);** FIG. 4, top, compared to that of a seated dental crown of the present disclosure (as depicted in **100B);** FIG. 4, bottom. It can be seen the dental crown with protrusions experiences virtually no measured stress (via FEM simulation), whereas the traditional dental crown areas of varying stress that may lead to cracking.
**FIG. 5A** is a flow chart of a method **501** for repairing a tooth. Method **501** includes **503** providing a dental crown described herein, **505** placing the dental crown on a tooth structure, and **507** applying pressure to the dental crown such that protrusions "snap" over a retention feature on the tooth structure.
**FIG. 5B** **and** **FIG. 5C** are illustrations of repairing a tooth with a dental crown **500** of the present disclosure. Dental crown **500** (showing an occlusion surface **516)** is placed on a tooth structure **512** having a retention feature **514.** In **FIG. 5B****,** said retention feature **514** is a basal ridge. As seen in **FIG. 5C****,** applying pressure to dental crown **500** causes protrusions **510** to exert pressure on the crown wall **518** (see **FIG. 6B** for further illustration) causing it to stretch and contract under the applied force. Protrusions **510** may deform to some extent (e.g., spring-type protrusions) or may not (e.g., hemispherical protrusions). Upon traversing retention feature **514,** protrusions **510** and/or crown wall **518** return to the original state such that the protrusions **510** are beneath retention feature **514** thus securing dental crown **500** to the tooth structure. The dental crown is often provided with a cement (not shown) deposited within the crown recess prior to placing the dental crown on the tooth structure.
**FIG. 6A** is an illustration of a traditional dental crown (as depicted in **100A)** and the representative forces (arrows) that the crown experiences upon seating and/or removing. The forces are more or less equally distributed into the crown wall causing an outward expansion throughout, leading to potential cracking when the internal stresses become too high. These outward forces remain present even when seated.
**FIG. 6B** is an illustration of a dental crown (e.g., as depicted in **100B)** having protrusions along the crown wall and the representative forces (arrows) that the crown experiences upon seating and/or removing. Outward forces are concentrated at the points in which the protrusions are located. The isolated outward expansion of the crown wall at the points of protrusion causes the crown wall and rim to tangentially stretch toward the protrusion area to accommodate the outward force. Consequently, the areas void of protrusion (e.g., mesial and lingual surfaces, as shown here) bend inward.
**FIG. 7** is a flowchart of a method **701** for preparing a dental crown of the present disclosure. Method **701** includes constructing a dental crown by way of additive manufacturing, injection molding, deep drawing, cold-forming, thermoforming, subtractive manufacturing, or a combination thereof.

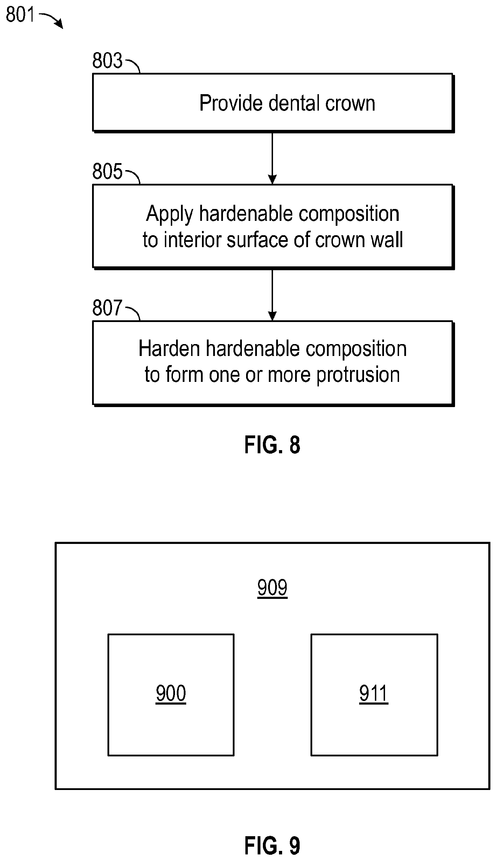

**FIG. 8** is a flowchart of a method **801** for preparing a dental crown of the present disclosure. Method **801** includes **803** providing a dental crown, **805** applying a hardenable composition to the interior surface of the crown wall, and **807** hardening the hardenable composition to form one or more protrusion.
**FIG. 9** is a kit **909** including one or more dental crown **900** of the present disclosure and a set of instructions **911** directing a user to carry out the steps of a method for repairing a tooth (e.g., see method **501** of **FIG. 5A****).**

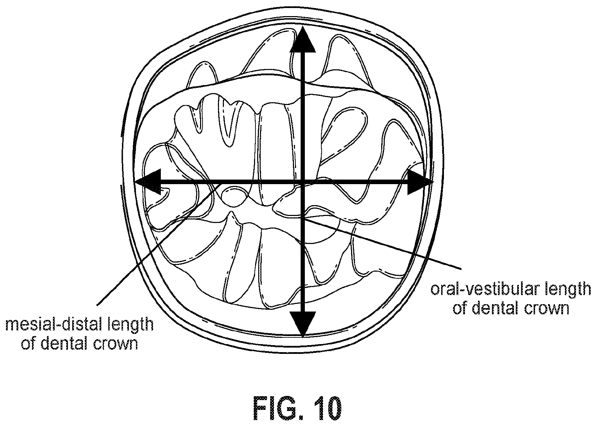

**FIG. 10** depicts a crown and illustrates the definitions of mesial-distal length and oral-vestibular length.

### Definitions

As used herein, "about" means ± 10 percent of a given value. For example, about 10 means 9 to 11.

As used herein, "additive manufacturing" refers to the construction of a three-dimensional object from a computer-aided design "CAD" model or digital 3D model. Example additive manufacturing processes include vat photopolymerization, material jetting, binder jetting, powder bed fusion, material extrusion, directed energy deposition, sheet lamination, and the like.

As used herein, "average" refers to the mean.

As used herein, "cold forming" refers to a process of forging metals at near room temperatures.

As used herein, "circumferential rim" refers to the termination of the crown wall, opposite the occlusal or incisal surface.

As used herein, "comparable traditional dental crown" refers to a dental crown without protrusions and is made of the same material as a dental crown of the present disclosure with which a comparison is being made. A comparable traditional dental crown has at least one dimension (i.e., mesial-distal length or oral-vestibular length) that is smaller (no greater than 5%) than the dimension of the dental crown of the present disclosure with which the comparison is being made.

As used herein, "crown height" refers to the greatest measurement from a point along the circumferential rim and a point along the occlusal or incisal surface.

As used herein, "crown wall" refers to the buccal, lingual, mesial, and distal sides, both interior and exterior, of the dental crown extending from the occlusal or incisal surface.

As used herein, "deep drawing" refers to a sheet metal forming process in which a sheet is drawn into a forming die by mechanical action of a punch.

As used herein, "hardenable composition" refers to a composition of monomers that, upon polymerization (i.e., hardening), form a polymer(s) (i.e., hardened). Hardenable monomers may include condensation monomers (i.e., for step-growth polymerization), addition monomers (i.e., chain-growth polymerization), or a combination thereof.

As used herein, "hook shape" or "spring shape" refers to any hollow, incomplete three-dimensional shape. With regard to protrusions, an incomplete shape is one that has a free end that is not attached to the crown wall. Without wishing to be bound by theory, hook or spring shapes may allow for greater distribution of applied force via compression (spring) of the protrusion.

As used herein, "injection molding" refers to a process involving injecting molten material into a mold.

As used herein, the phrase "one or more of" such as used in the phrase "one or more of A and B" or "one or more of at least one A and at least one B" means a composition may include at least one A, more than one A, at least one B, more than one B, at least one A and at least one B, more than one A and more than one B. In other words, the phrase is not intended to mean the composition must have at least one of each of A and B.

As used herein, "mesial-distal length" refers to the greatest length measured between the mesial side (i.e., forward side) and the distal side (i.e., back side) of the dental crown (see depiction below) within the dental crown recess. A "mesial-distal length" with regard to tooth structure likewise refers to the greatest length measured. The mesial-distal length of the dental crown and the tooth structure may vary greatly depending on the type of subject, the age of the subject, the type of tooth, and the overall size of the subject's teeth. See **FIG. 10** for illustration.

As used herein, "occlusal surface" refers to the surface of the dental crown for a molar or pre-molar tooth that would contact a molar or pre-molar tooth of the opposite jaw (maxillary or mandibular), i.e., the biting surface. Similarly, "incisal surface" refers to the biting surface of a dental crown for an incisor or canine tooth.

As used herein, "oral-vestibular length" refers to the greatest inner length measured between the buccal side (i.e., cheek side or vestibular side) and the lingual oral side (i.e., tongue side or oral side) of the dental crown (see depiction below) within the dental crown recess. An "oral-vestibular length" with regard to the tooth structure likewise refers to the greatest length measured. The oral-vestibular length of the dental crown and the tooth structure may vary greatly depending on the type of subject, the age of the subject, the type of tooth, and the overall size of the subject's teeth. See **FIG. 10** for illustration.

As used herein, "protrusion" refers to a physical feature within a localized area along the interior of the crown wall that effectively increases the thickness of the crown wall in that localized area.

As used herein, "pull-off force" refers to the force required to remove the dental crown from a tooth structure. A pulling force causes stress within the dental crown. The pull-off force is, at least in part, dependent upon the dimensions of the dental crown in relation to the dimensions of the tooth structure. The present of protrusions dramatically reduces, in comparison to a traditional dental crown without protrusions, the pull-off force required.

As used herein, "retention feature" refers to an area on a tooth structure that is wider than the areas above and below it. Retention features may refer to at least a portion of the natural basal ridge, or refer to an area prepared by a dentist that wider than the areas immediately above and below it. Retention features may partly or fully encircle the tooth structure (e.g., a full or partial basal ridge), or may be localized to specific areas within the tooth structure (e.g., areas prepared by the dentist to correspond with placement of the protrusions within the dental crown). A retention feature, in conjunction with a protrusion, secure a dental crown to the tooth structure.

As used herein, "seated stress" refers to the average stress experienced throughout the dental crown when seated on a tooth structure. The seated stress is a measure of the pressure exerted on the dental crown by the tooth structure. A well-fitted dental crown of the present disclosure will have a negligible seated stress. See, for example, **FIG. 4****.**

As used herein, "seating force" refers to the force required to seat the dental crown onto a tooth structure. A seating force causes stress within the dental crown. The seating force is, at least in part, dependent upon the dimensions of the dental crown in relation to the dimensions of the tooth structure. The present of protrusions dramatically reduces, in comparison to a traditional dental crown without protrusions, the seating force required.

As used herein, "tooth structure size" or "tooth structure dimension(s)" refers to the largest measurable mesial-distal length, oral-vestibular length, height, or a combination thereof within a tooth structure.

As used herein, "subject" refers to a mammal of any age, e.g., a human, a canine, a feline, a horse, a cow, a pig, or the like.

As used herein, "subtractive manufacturing" refers to a process in which objects are constructed by cutting away material from a solid block of material.

As used herein, "thermoforming" refers to a process in which a sheet is heated to a pliable temperature, formed to a specific shape in a mold, and trimmed if necessary.

As used herein, "tooth structure" refers to hard dental tissue, a prepared tooth, a dental implant, or a dental implant having build-up material thereon. A dentist prepares a tooth in need of a crown by removing carious tooth material and/or otherwise shaping the tooth material to better receive the crown. A tooth structure need not necessarily be prepared by a dentist.

### Dental Crowns

In various embodiments, a dental crown is described. The dental crown may have an occlusion surface or an incisal surface depending upon the particular tooth that is in need of repair; a tooth structure-facing surface located opposite the occlusion surface or the incisal surface; a crown wall that surrounds the tooth structure-facing surface and terminates at a circumferential rim; a recess defined at least by the tooth structure-facing surface and the crown wall, and configured to receive a tooth structure having a retention feature; and at least one protrusion extending from the crown wall within the recess.

In some embodiments, the occlusion/incisal surface, the tooth structure-facing surface, the crown wall, and the at least one protrusion may be independently constructed from materials including stainless steel, ceramic (e.g., zirconia), thermoplastic polymers (e.g., polyacetal, polyacrylate, (meth)acrylate and urethane(meth)acrylate copolymers, polymethylmethacrylate (PMMA), polyaryletherketone (PAEK), polyetherketone (PEK), polyether ether ketone (PEEK), polyetherimide (PEI), polyethersulfone (PES), polysulfone (PSU), or a combination thereof. In some embodiments, the dental crown may be constructed from a composite described in WO 2017/155692.

In some embodiments, the crown wall and circumferential rim may have an average thickness that is no greater than 1/20 of the oral-vestibular length of the dental crown. In some embodiments, the crown wall and the circumferential rim may have an average thickness of about 0.10 mm to about 1.30 mm. For example, the average thickness of the crown wall and circumferential rim may be, in mm, about 0.10, 0.15, 0.20, 0.25, 0.3, 0.35, 0.40, 0.45, 0.50, 0.55, 0.60, 0.65, 0.70, 0.75, 0.80, 0.85, 0.90, 0.95, 1.00, 1.05, 1.10, 1.15, 1.20, 1.25, or 1.30, or a value within a range between any of the preceding values, e.g., between about 0.20 and about 0.80, between about 0.35 and about 0.55, or the like. In some embodiments, the crown wall and the circumferential rim may have an average thickness of about 0.1 mm to about 1.3 mm. For example, the crown wall and the circumferential rim may have an average thickness, in mm, of about 0.1, 0.2, 0.3, 0.4, 0.5, 0.6, 0.7, 0.8, 0.9, 1.0, 1.1, 1.2, or 1.3, or a value within a range between any of the preceding values, e.g., between about 0.4 and about 0.8, between about 0.2 and about 1.0, or the like.

In some embodiments, a dental crown of the present disclosure may require a seating force of greater than 0 N and no greater than 20 N. A seating force of zero may imply that the dental crown is too big for the given tooth structure and would lead to rocking and tilting of the dental crown. For example, a dental crown may require a seating force (in N) of 1, 2, 3, 4, 5, 6, 7, 8, 9, 10, 11, 12, 13, 14, 15, 16, 17, 18, 19, or 20, or a value within a range between any of the preceding values, e.g., between 5 and 15, between 10 and 18, or the like. The seating force values described herein are with respect to dental crown dimensions (e.g., oral-vestibular length) being greater than the tooth structure dimensions (e.g., oral-vestibular length) of greater than 1% and no greater than 5%, e.g., 1%, 2%, 3%, 4%, 5%, or a value within a range between any of the preceding values, for example, between 2% and 3%, between 1% and 4%, or the like.

In some embodiments, a dental crown of the present disclosure may be characterized by a reduction in seating force of greater than about 35% relative to the seating force of a comparable traditional dental crown on an identical tooth structure. For example, a dental crown may be characterized by a reduction in seating force of about 35%, 40%, 45%, 50%, 55%, 60%, 65%, 70%, 75%, or more, or a value within a range between any of the preceding values, e.g., between about 40% and about 50%, between about 35% and about 55%, or the like.

In some embodiments, a dental crown of the present disclosure may require a pull-off force of greater than 0 N and no greater than 20 N. A pull-off force of zero may imply that the dental crown is too big for the given tooth structure. For example, a dental crown may require a pull-off force (in N) of 1, 2, 3, 4, 5, 6, 7, 8, 9, 10, 11, 12, 13, 14, 15, 16, 17, 18, 19, or 20, or a value within a range between any of the preceding values, e.g., between 5 and 15, between 10 and 18, or the like. The pull-off force values described herein are with respect to dental crown dimensions (e.g., oral-vestibular length) being greater than the tooth structure dimensions (e.g., oral-vestibular length) of greater than 1% and no greater than 5%, e.g., 1%, 2%, 3%, 4%, 5%, or a value within a range between any of the preceding values, for example, between 2% and 3%, between 1% and 4%, or the like.

In some embodiments, a dental crown of the present disclosure may be characterized by a reduction in pull-off force of greater than about 15% relative to the pull-off force of a comparable traditional dental crown on an identical tooth structure. For example, a dental crown may be characterized by a reduction in pull-off force of about 15%, 20%, 25%, 30%, 35%, 40%, 45%, 50%, 55%, 60%, or more, or a value within a range between any of the preceding values, e.g., between about 25% and about 50%, between about 20% and about 40%, or the like.

In some embodiments, a dental crown of the present disclosure may be characterized by a seated stress of 0 MPa to no greater than 5 MPa. For example, a dental crown may be characterized by a seated stress (in MPa) of 0, 0.5, 1.0, 1.5, 2.0, 2.5, 3.0, 3.5, 4.0, 4.5, 5.0, or a value within a range between any of the preceding values, e.g., between 0.5 and 1.5, between 0 and 2.0, or the like. The seated stress values described herein are with respect to dental crown dimensions (e.g., oral-vestibular length) being greater than the tooth structure dimensions (e.g., oral-vestibular length) of greater than 1% and no greater than 5%, e.g., 1%, 2%, 3%, 4%, 5%, or a value within a range between any of the preceding values, for example, between 2% and 3%, between 1% and 4%, or the like.

In some embodiments, a dental crown of the present disclosure may be characterized by a reduction in seated stress of greater than about 50% relative to the seated stress of a comparable traditional dental crown on an identical tooth structure. For example, a dental crown of the present disclosure may be characterized by a reduction in seated stress of about 50%, 55%, 60%, 65%, 70%, 75%, 80%, 85%, 90%, 95%, or more, or a value within a range between any of the preceding values, e.g., between about 65% and about 80%, between about 55% and about 75%, or the like.

In some embodiments, the dental crown may have 2-10 protrusions within the recess. For example, the dental crown may have 2, 3, 4, 5, 6, 7, 8, 9, or 10 protrusions, or a number of protrusions within a range between any of the preceding values, e.g., 2 or 3, between 2 and 4, or the like. Protrusions may be present anywhere within the crown recess (i.e., along any interior surface of the recess). In some embodiments, the dental crown may have two protrusions, e.g., one located along a buccal surface within the recess, and one located along a lingual surface within the recess, or vice versa, i.e., two protrusions along the lingual surface and one protrusion along the buccal surface. In some embodiments, the dental crown may have three protrusions, e.g., one (or two) located along a buccal surface within the recess, and two (or one) located along a lingual surface within the recess. In many embodiments, the mesial surface and the distal surface within the recess may be free of protrusions.

In some embodiments, protrusions may be located at any distance along the crown wall from the circumferential rim. When more than one protrusion is present, the protrusions may be located at equal distances from the circumferential rim or be located at nonequal distances from the circumferential rim. The distance from the circumferential rim of each protrusion may be selected according to measurements of natural (e.g., basal ridge) or manufactured (i.e., dentist prepared) retention features within the tooth structure. In some embodiments, protrusions may be independently located at a position from the circumferential rim at a distance that is equivalent to about 0% to about 35% of the crown height. For example, a protrusion may be located at a position from the circumferential rim that is about 0, 2, 5, 8, 10, 12, 15, 18, 20, 22, 25, 28, 30, 32 or 35% of the crown height, or a value within a range between any of the preceding values, e.g., between about 5% and about 15%, between about 10% and about 20%, or the like. For example, a crown height (i.e., the greatest distance measured from rim to occlusion/incisal surface) of 8 mm, may have protrusions located at a distance from the rim of about 0 mm to about 2.8 mm. The height of the dental crown may vary greatly depending on the type of subject, the age of the subject, the type of tooth, and the overall size of the subject's teeth.

In embodiments where more than one protrusion is present, the protrusions may be of the same shape and size, the same shape and different size, or a different shape altogether. Any size and shape may be considered so long as protrusions effectively redistribute the force/stress within the crown upon seating and removing. In some embodiments, at least one protrusion may have a solid or hollow shape selected from spheres, hemispheres, cylinders, semicylinders, wedges, pyramids, frustra, cubes, cuboids, parallelepiped, other prisms (e.g., hexagonal prisms), cupolaes, or the like. In some embodiments, at least one protrusion may have a hook shape. Hook shapes may take any form so long as one end of the shape is not connected to the crown wall.

In some embodiments, a protrusion may be characterized by a height, measured from the crown wall toward the center of the recess, and a width, measured along the crown wall. The height and the width of each protrusion may independently be selected from about 1% to about 10% of the oral-vestibular length of the dental crown. In some embodiments, a protrusion may be characterized by a height and/or a width that is about 1, 1.5, 2, 2.5, 3, 3.5, 4, 4.5, 5, 5.5, 6, 6.5, 7, 7.5, 8, 8.5, 9, 9.5, or 10% of the oral-vestibular length of the dental crown, or a value within a range between any of the preceding values, e.g., between about 5% and about 8%, between about 2% and about 6%, or the like. For example, a dental crown having an oral-vestibular length of 6 mm, may have one or more protrusion with a height and/or width of about 0.06 mm to about 0.6 mm.

In some embodiments, a dental crown of the present disclosure may have two protrusions. In some embodiments, the protrusions may be located on opposite crown walls, e.g., one protrusion on the mesial surface and the other on the distal surface, e.g., one protrusion on the buccal surface (aka vestibular surface) and the other on the lingual surface (aka oral surface).

In some embodiments, a dental crown of the present disclosure may have three protrusions. In some embodiments, the protrusions may be located on opposite crown walls, e.g., one (or two) protrusion on the mesial surface and two (or one) protrusion on the distal surface, e.g., one (or two) protrusion on the buccal surface (i.e., vestibular surface) and two (or one) protrusion on the lingual surface (i.e., oral surface).

In some embodiments, a dental crown of the present disclosure may have four protrusions. In some embodiments, a protrusion may be located on a each of the mesial, distal, buccal/vestibular, and lingual/oral crown wall surfaces. In other embodiments, two protrusions may be located on one crown wall surface and two protrusions may be located on the opposite crown wall surface.

### Methods of Preparing a Dental Crown

In various embodiments, a method for preparing a dental crown of the present disclosure is described. The method may include constructing a dental crown including at least one protrusion by way of an additive manufacturing technique, an injection molding technique, a deep-drawing technique, a cold-forming technique, a thermoforming technique, a subtractive manufacturing technique, or a combination thereof.

In some embodiments, the dental crown may be constructed by way of additive manufacturing, injection molding, thermoforming, subtractive manufacturing, or a combination thereof.

In some embodiments, the dental crown may be constructed by way of additive manufacturing, substrative manufacturing, or a combination thereof.

In some embodiments, the dental crown may be constructed by way of additive manufacturing.

### Methods for modifying a dental crown

In various embodiments, a method for preparing a dental crown of the present disclosure is described. The method may include providing a dental crown with or without at least one protrusion (e.g., a traditional-type crown or a crown of the present disclosure), applying a hardenable composition to an interior surface of the crown wall, and hardening the hardenable composition to form at least one protrusion.

In some embodiments, the hardenable composition may include polymerizable monomers for preparing polymers selected from polyacetal, polyacrylate, (meth)acrylates and urethane(meth)acrylates copolymers (such as those described in WO 2017/155692), polymethylmethacrylate (PMMA), polyaryletherketone (PAEK), polyetherketone (PEK), polyether ether ketone (PEEK), polyetherimide (PEI), polyethersulfone (PES), polysulfone (PSU), or a combination thereof.

In some embodiments, the method may further include removing one or more protrusion. The removing may involve grinding, sand-blasting, laser-cutting, filing, sanding, cutting, or a combination thereof.

In some embodiments, the method may further include adjusting the shape of one or more protrusion. The adjusting may involve grinding, sand-blasting, laser-cutting, filing, sanding, cutting, or a combination thereof.

### Methods for Repairing a Tooth Structure

In various embodiments, a method for repairing a tooth is described. The method may include providing a dental crown described herein, placing the dental crown onto a tooth structure such that the tooth structure is inserted into the recess of the dental crown, and applying pressure (i.e., a seating force) to the dental crown effective to allow the at least one protrusion to traverse a retention feature on the tooth structure.

In some embodiments, the method may further include measuring the dimensions of the tooth structure, measuring the dimensions of one or more dental crowns, and selecting a dental crown of appropriate dimensions for a given tooth structure.

In some embodiments, the method may further include preparing the tooth structure such that the tooth structure includes a retention feature or modifies an existing retention feature. Preparing a tooth structure to include or modify a retention feature may include removing dental tissue, applying a hardenable composition to the tooth structure and hardening the hardenable composition, or a combination thereof.

In some embodiments, the method may further include fitting the dental crown to the tooth structure. Fitting may include adjusting the shape of the tooth structure, including for example, preparing a retention feature or modifying the retention feature. Fitting may also include modifying the shape of the dental crown and/or modifying the shape of one or more protrusion. In some embodiments, fitting may further include adding one or more protrusion and/or removing one or more protrusion.

In some embodiments, the method may further include applying a cement within the recess of the dental crown prior to placing the dental crown on the tooth structure. In some embodiments, the cement may be selected from glass ionomer cements (e.g., Ketac^{™} Cem; 3M Oral Care; 3M ESPE), resin-modified glass ionomer cements (e.g., Ketac^{™} Cem Plus; 3M Oral Care; 3M ESPE), self-adhesive resin cements (e.g., RelyX^{™} Unicem; 3M Oral Care; 3M ESPE), adhesive resin cements (e.g., RelyX^{™} Ultimate; 3M Oral Care; 3M ESPE), or a combination thereof. Glass ionomer cements often include an acid-reactive filler (e.g., a fluoroalumosilicate glass, FAS glass), a polyacid, water, and a complexing agent (e.g., tartaric acid), and no radiation curable components. Resin-modified glass ionomers often include an acid-reactive filler (e.g., a fluoroalumosilicate glass, FAS glass), a polyacid, water, a complexing agent, radiation curable components (e.g., (meth)acrylate monomers), and an initiator.

### Methods for modifying a dental crown and repairing a tooth

In various embodiments, a method for repairing a tooth is described. The method may include providing a dental crown (i.e., any dental crown with or without existing protrusions), applying a hardenable dental composition to an interior surface of the crown wall of the dental crown, hardening the dental composition to form at least one protrusion (protrusions described herein), placing the dental crown onto a tooth structure such that the tooth structure is inserted into a recess of the dental crown, and applying pressure to the dental crown effective to allow the at least one protrusion to traverse a retention feature on the tooth structure.

In some embodiments, the dental crown does not have any protrusions present and the practitioner may add protrusions to the crown wall by methods described herein. The method may further include other steps described herein regarding fitting of a dental crown, e.g., adjusting the shape of the tooth structure, the dental crown, and/or one or more protrusion; removing one or more protrusion, or a combination thereof.

In various embodiments, a kit is described. The kit may include a dental crown of the present disclosure (i.e., having at least one protrusion), and a set of instructions directing a user to perform the method steps described herein for repairing a tooth.

In various embodiments, a kit is described. The kit may include a dental crown with or without at least one protrusion, and a set of instructions directing a user to perform the method steps for modifying the dental crown to form a dental crown having at least one protrusion. In some embodiments, the instructions may further direct a user to repair a tooth with the formed dental crown having at least one protrusion.

In some embodiments, the kit(s) may further include a hardenable composition described herein. In some embodiments, the hardenable composition may be provided within an applicator. In some embodiments, an applicator containing the hardenable composition may be metered to deliver a determined volume of hardenable composition to adequately prepare a protrusion. In some embodiments, an applicator containing the hardenable composition may have a mechanism to adjust the metered delivery of hardenable composition.

In some embodiments, the kit(s) may further include a cement described herein for securing the dental crown to the tooth structure. The instructions may further direct a user to apply the cement to at least a portion of the interior surface (i.e., recess) of the dental crown.

## Claims

1. A dental crown 100 comprising:
an occlusion surface or an incisal surface;
a tooth structure-facing surface 102 opposite the occlusion surface or the incisal surface;
a crown wall 106 surrounding the tooth structure-facing surface 102 and terminating at a circumferential rim 108;
a recess 104 defined at least by the tooth structure-facing surface and the crown wall 106,
the recess 104 configured to receive a tooth structure having a retention feature; and
at least one protrusion 110 extending from the crown wall 106 within the recess, wherein a mesial surface and a distal surface within the recess are each free of the at least one protrusion.

2. The dental crown 100 of any one of the preceding claims, prepared from a material comprising stainless steel, ceramic, thermoplastic polymers, or a combination thereof.

3. The dental crown 100 of any one of the preceding claims, prepared from a material comprising polyacetal, polyacrylate, (meth)acrylate and urethane(meth)acrylate copolymers, polymethylmethacrylate (PMMA), polyaryletherketone (PAEK), polyetherketone (PEK), polyether ether ketone (PEEK), polyetherimide (PEI), polyethersulfone (PES), polysulfone (PSU), or a combination thereof.

4. The dental crown 100 of any one of the preceding claims, wherein the crown wall 106 and the circumferential rim 108 are **characterized by** an average thickness that is less than or equal to 1/20 of an average oral-vestibular length of the dental crown.

5. The dental crown 100 of any one of the preceding claims, wherein the crown wall 106 and the circumferential rim 108 are **characterized by** an average thickness of about 0.1 mm to about 1.3 mm.

6. The dental crown of any one of the preceding claims, comprising 2-6 protrusions 110.

7. The dental crown 100 of any one of the preceding claims, comprising 2 or 3 protrusions 110.

8. The dental crown of any one of the preceding claims, wherein each protrusion 110 is independently located within the recess along a buccal surface or a lingual surface of the crown wall.

9. The dental crown 100 of any one of the preceding claims, comprising two protrusions 110 wherein one protrusion 110 is located within the recess 104 along a buccal surface and one protrusion 110 is located within the recess along a lingual surface.

10. The dental crown 100 of any one of the preceding claims, comprising three protrusions 110, wherein:
one protrusion 110 is located within the recess 104 along a buccal surface, and two protrusions 110 are located within the recess 104 along a lingual surface; or
one protrusion 110 is located within the recess 104 along the lingual surface, and two protrusions are located within the recess along a buccal surface.

11. The dental crown 100 of any one of the preceding claims, one or more of the at least one protrusion 110 having a solid, spherical shape.

12. The dental crown 100 of any one of the preceding claims, one or more of the at least one protrusion 110 having a hook shape.

13. The dental crown 100 of any one of the preceding claims, each of the at least one protrusion 110 independently **characterized by** a height that is equivalent to about 1 % to about 10% of an oral-vestibular length of the dental crown.

14. The dental crown 100 of any one of the preceding claims, each of the at least one protrusion 110 independently **characterized by** a width that is equivalent to about 1% to about 10% of an oral-vestibular length of the dental crown.

15. The dental crown 100 of any one of the preceding claims, each of the at least one protrusion 110 being independently positioned at a distance from the circumferential rim 108 that is equivalent to about 0% to about 35% of a height of the dental crown.

## Patentansprüche

1. Eine Zahnkrone 100, die aufweist:
eine Okklusionsfläche oder eine Inzisalfläche;
eine der Zahnstruktur zugewandte Fläche 102 gegenüber der Okklusionsfläche oder der Inzisalfläche;
eine Kronenwand 106, die die der Zahnstruktur zugewandte Fläche 102 umgibt und an einem Umfangsrand 108 endet;
eine Aussparung 104, die mindestens durch die der Zahnstruktur zugewandte Fläche und die Kronenwand 106 definiert ist, wobei die Aussparung 104 konfiguriert ist, um eine Zahnstruktur, die ein Haltemerkmal hat, aufzunehmen; und
mindestens einen Vorsprung 110, der sich von der Kronenwand 106 innerhalb der Aussparung erstreckt, wobei eine mesiale Fläche und eine distale Fläche innerhalb der Aussparung jeweils frei von dem mindestens einen Vorsprung sind.

2. Die Zahnkrone 100 nach einem der vorstehenden Ansprüche, hergestellt aus einem Material, das rostfreien Stahl, Keramik, thermoplastische Polymere oder eine Kombination davon aufweist.

3. Die Zahnkrone 100 nach einem der vorstehenden Ansprüche, hergestellt aus einem Material, das Polyacetal, Polyacrylat, (Meth)acrylat- und Urethan(meth)acrylatCopolymere, Polymethylmethacrylat (PMMA), Polyaryletherketon (PAEK), Polyetherketon (PEK), Polyetheretherketon (PEEK), Polyetherimid (PEI), Polyethersulfon (PES), Polysulfon (PSU) oder eine Kombination davon aufweist.

4. Die Zahnkrone 100 nach einem der vorstehenden Ansprüche, wobei die Kronenwand 106 und der Umfangsrand 108 **gekennzeichnet sind durch** eine durchschnittliche Dicke, die kleiner als oder gleich 1/20 einer durchschnittlichen oral-vestibulären Länge der Zahnkrone ist.

5. Die Zahnkrone 100 nach einem der vorstehenden Ansprüche, wobei die Kronenwand 106 und der Umfangsrand 108 **gekennzeichnet sind durch** eine durchschnittliche Dicke von etwa 0,1 mm bis etwa 1,3 mm.

6. Die Zahnkrone nach einem der vorstehenden Ansprüche, die 2-6 Vorsprünge 110 aufweist.

7. Die Zahnkrone 100 nach einem der vorstehenden Ansprüche, die 2 oder 3 Vorsprünge 110 aufweist.

8. Die Zahnkrone nach einem der vorstehenden Ansprüche, wobei sich jeder Vorsprung 110 unabhängig innerhalb der Aussparung entlang einer bukkalen Fläche oder einer lingualen Fläche der Kronenwand befindet.

9. Die Zahnkrone 100 nach einem der vorstehenden Ansprüche, die zwei Vorsprünge 110 aufweist, wobei sich ein Vorsprung 110 innerhalb der Aussparung 104 entlang einer bukkalen Fläche befindet und sich ein Vorsprung 110 innerhalb der Aussparung entlang einer lingualen Fläche befindet.

10. Die Zahnkrone 100 nach einem der vorstehenden Ansprüche, die drei Vorsprünge 110 aufweist, wobei:
sich ein Vorsprung 110 innerhalb der Aussparung 104 entlang einer bukkalen Fläche befindet und sich zwei Vorsprünge 110 innerhalb der Aussparung 104 entlang einer lingualen Fläche befinden; oder
sich ein Vorsprung 110 innerhalb der Aussparung 104 entlang der lingualen Fläche befindet und sich zwei Vorsprünge innerhalb der Aussparung entlang einer bukkalen Fläche befinden.

11. Die Zahnkrone 100 nach einem der vorstehenden Ansprüche, wobei ein oder mehrere des mindestens einen Vorsprungs 110 eine feste, kugelförmige Form haben.

12. Die Zahnkrone 100 nach einem der vorstehenden Ansprüche, wobei ein oder mehrere des mindestens einen Vorsprungs 110 eine Hakenform haben.

13. Die Zahnkrone 100 nach einem der vorstehenden Ansprüche, wobei jeder des mindestens einen Vorsprungs 110 unabhängig **gekennzeichnet ist durch** eine Höhe, die etwa 1 % bis etwa 10 % einer oral-vestibulären Länge der Zahnkrone entspricht.

14. Die Zahnkrone 100 nach einem der vorstehenden Ansprüche, wobei jeder des mindestens einen Vorsprungs 110 unabhängig **gekennzeichnet ist durch** eine Breite, die etwa 1 % bis etwa 10 % einer oral-vestibulären Länge der Zahnkrone entspricht.

15. Die Zahnkrone 100 nach einem der vorstehenden Ansprüche, wobei jeder des mindestens einen Vorsprungs 110 unabhängig in einem Abstand von dem Umfangsrand 108 angeordnet ist, der etwa 0 % bis etwa 35 % einer Höhe der Zahnkrone entspricht.

## Revendications

1. Couronne dentaire 100 comprenant :
une surface d'occlusion ou une surface incisive ;
une surface faisant face vers la structure dentaire 102 opposée à la surface d'occlusion ou à la surface incisive ;
une paroi de couronne 106 entourant la surface faisant face vers la structure dentaire 102 et se terminant au niveau d'un rebord circonférentiel 108 ;
un évidement 104 défini au moins par la surface faisant face vers la structure dentaire et la paroi de couronne 106, l'évidement 104 étant conçu pour recevoir une structure dentaire ayant une caractéristique de rétention ; et
au moins une protubérance 110 s'étendant à partir de la paroi de couronne 106 au sein de l'évidement, dans laquelle une surface mésiale et une surface distale au sein de l'évidement sont exemptes chacune de l'au moins une protubérance.

2. Couronne dentaire 100 selon l'une quelconque des revendications précédentes, préparée à partir d'un matériau comprenant de l'acier inoxydable, de la céramique, des polymères thermoplastiques, ou une combinaison de ceux-ci.

3. Couronne dentaire 100 selon l'une quelconque des revendications précédentes, préparée à partir d'un matériau comprenant polyacétal, polyacrylate, (méth)acrylate et copolymères (méth)acrylate d'uréthane, polyméthylméthacrylate (PMMA), polyaryléthercétone (PAEK), polyéthercétone (PEK), polyéther-éther-cétone (PEEK), polyétherimide (PEI), polyéthersulfone (PES), polysulfone (PSU), ou une combinaison de ceux-ci.

4. Couronne dentaire 100 selon l'une quelconque des revendications précédentes, dans laquelle la paroi de couronne 106 et le rebord circonférentiel 108 sont **caractérisés par** une épaisseur moyenne qui est inférieure ou égale à 1/20 d'une longueur bucco-vestibulaire moyenne de la couronne dentaire.

5. Couronne dentaire 100 selon l'une quelconque des revendications précédentes, dans laquelle la paroi de couronne 106 et le rebord circonférentiel 108 sont **caractérisés par** une épaisseur moyenne d'environ 0,1 mm à environ 1,3 mm.

6. Couronne dentaire selon l'une quelconque des revendications précédentes, comprenant 2 à 6 protubérances 110.

7. Couronne dentaire 100 selon l'une quelconque des revendications précédentes, comprenant 2 ou 3 protubérances 110.

8. Couronne dentaire selon l'une quelconque des revendications précédentes, dans laquelle chaque protubérance 110 est indépendamment localisée au sein de l'évidement le long d'une surface buccale ou d'une surface linguale de la paroi de couronne.

9. Couronne dentaire 100 selon l'une quelconque des revendications précédentes, comprenant deux protubérances 110 dans laquelle une protubérance 110 est localisée au sein de l'évidement 104 le long d'une surface buccale et une protubérance 110 est localisée au sein de l'évidement le long d'une surface linguale.

10. Couronne dentaire 100 selon l'une quelconque des revendications précédentes, comprenant trois protubérances 110, dans laquelle :
une protubérance 110 est localisée au sein de l'évidement 104 le long d'une surface buccale, et deux protubérances 110 sont localisées au sein de l'évidement 104 le long d'une surface linguale ; ou
une protubérance 110 est localisée au sein de l'évidement 104 le long de la surface linguale, et deux protubérances sont localisées au sein de l'évidement le long d'une surface buccale.

11. Couronne dentaire 100 selon l'une quelconque des revendications précédentes, une ou plusieurs parmi l'au moins une protubérance 110 ayant une forme sphérique pleine.

12. Couronne dentaire 100 selon l'une quelconque des revendications précédentes, une ou plusieurs parmi l'au moins une protubérance 110 ayant une forme de crochet.

13. Couronne dentaire 100 selon l'une quelconque des revendications précédentes, chacune parmi l'au moins une protubérance 110 étant **caractérisée** indépendamment **par** une hauteur qui est équivalente à environ 1 % à environ 10 % d'une longueur bucco-vestibulaire de la couronne dentaire.

14. Couronne dentaire 100 selon l'une quelconque des revendications précédentes, chacune parmi l'au moins une protubérance 110 étant **caractérisée** indépendamment **par** une largeur qui est équivalente à environ 1 % à environ 10 % d'une longueur bucco-vestibulaire de la couronne dentaire.

15. Couronne dentaire 100 selon l'une quelconque des revendications précédentes, chacune parmi l'au moins une protubérance 110 étant indépendamment positionnée à une distance du rebord circonférentiel 108 qui est équivalente à environ 0 % à environ 35 % d'une hauteur de la couronne dentaire.
